# FASCICULE DE BREVET EUROPEEN

(11) **EP 3 432 722 B1**
(45) Date de publication et mention de la délivrance du brevet: **01.05.2024**
(21) Numéro de dépôt: 17712155.5
(22) Date de dépôt: 22.03.2017
(51) Int. Cl.: A21D 6/00, A21D 8/02

(54) **PROCEDE DE FABRICATION D'UNE PATE A TARTE CRUE PREFORMEE ET STABILISEE ET PRODUITS AFFERENTS**
VERFAHREN ZUR HERSTELLUNG VON VORGEFORMTEM UND STABILISIERTEM GEBÄCKROHTEIG UND ZUGEHÖRIGE PRODUKTE
METHOD FOR PRODUCING A PRE-SHAPED AND STABILISED RAW PASTRY DOUGH AND RELATED PRODUCTS

(30) Priorité: 22.03.2016 FR 1652461
(43) Date de publication de la demande: 30.01.2019
(73) Titulaire: MARIE, 94150 Rungis (FR)
(72) Inventeur: ROJAS GONZALEZ, Juan Alfredo, 72300 JUIGNE SUR SARTHE (FR)
(74) Mandataire: Tripoz, Inès
(86) Numéro de dépôt international: PCT/EP2017/056894
(87) Numéro de publication internationale: WO 2017/162782

(56) Documents cités:
- EP-A2- 0 824 863
- WO-A1-99/51100
- US-A- 5 236 724

## Description

### Champ de l'invention

La présente invention est relative à un procédé de fabrication d'un produit alimentaire défini comme une pâte, notamment une pâte dite à tarte, par exemple la pâte feuilletée, la pâte brisée ou analogue prête à garnir et les contraintes dues à son convoyage pendant la fabrication, aux phénomènes de rétreint après sa mise en forme, aux problèmes de résistance lors des opérations de garnissage et également les contraintes de transport pour la livraison des produits finis, crus ou cuits, frais ou surgelés et avec et sans garnissage.

### Historique de l'invention

Les pâtes, notamment les pâtes dites à tarte, par exemple la pâte feuilletée, brisée ou analogue, sont des produits alimentaires couramment élaborés et utilisés tant par l'industrie alimentaire que par les particuliers. Celles-ci, classiquement sont composées de façon majoritaire de farine, de matière grasse et d'eau, et peuvent être commercialisées sous forme de pâton à étaler par l'utilisateur final ; ou déjà étalées prêtes à être déposées dans un moule, et à garnir avant cuisson.

Dans le domaine des plats préparés industriels, où la pâte est foncée dans un moule puis optionnellement remplie de garniture avant d'être cuite puis surgelée ou réfrigérée, l'étape de mise en forme de la pâte est une étape importante. En effet, dans l'industrie, il est d'usage que le pâton soit déposé dans un moule où il subit directement le procédé de fonçage lui conférant la forme du dit moule.

Dans des variantes il pourra être foncé dans une presse puis avant de subir les opérations suivantes il va être placé dans un moule.

Lorsque les opérations de fonçage sont terminées, le moule n'a plus qu'une simple fonction de support.

En fonction des produits et des traitements qui sont appliqués sur les produits foncés, ils peuvent être maintenus dans le moule d'origine jusqu'à la livraison d'un produit final, garni et cuit, ce sera le cas par exemple avec des moules en aluminium, qui est l'un des moules les plus utilisés ou bien le produit sera à une des étapes transféré dans des moules en papier ou matière plastique par exemple après les étapes de cuisson.

S'il s'agit de moules en matière ne résistant pas à la chaleur, leur utilisation implique des transferts si des opérations de cuisson sont nécessaires lors des phases de fabrication. Si les opérations de cuisson sont assurées par le consommateur final, c'est celui-ci qui devra assumer les opérations de transfert dans un moule résistant à la chaleur.

S'il s'agit de moules en métal, s'ils doivent accompagner le produit tout au long de son cycle de vie, à savoir jusque chez le consommateur final, ils sont la plupart du temps en aluminium et peuvent résister à une dernière étape de cuisson chez le consommateur final.

L'usage de ces moules en aluminium pose des problèmes tant de développement durable que de santé chez l'humain.

En effet, seuls 55% des emballages alimentaires en aluminium suivent une filière de recyclage en Europe occidentale (European Aluminium Association : Les emballages en aluminium, 2014). Ce qui signifie que 45% des barquettes ou moules en aluminium, destinés à la consommation alimentaire domestique, se retrouvent dans la filière classique de gestion des déchets et ne peuvent bénéficier d'une nouvelle valorisation.

D'un point de vue sanitaire, la Commission européenne a demandé conseil quant aux risques éventuels pour la santé humaine liés à la présence d'aluminium dans l'alimentation. Le 15 juillet 2008, l'EFSA (European Food Safety Autority) a émis un avis sur la sécurité de l'aluminium dans l'alimentation. Cet avis stipule que dans la population en général, la principale source d'exposition à l'aluminium est le régime alimentaire, on peut trouver son origine de par sa présence naturelle, de par l'utilisation d'additifs alimentaires ou encore par la présence d'aluminium dans les ustensiles en contact avec les aliments. L'absorption d'aluminium par le régime alimentaire se fait principalement via les céréales et les produits à base de céréales (pain, gâteaux, biscuits et pâtisseries), les légumes, les boissons. Le groupe scientifique a évalué que l'exposition alimentaire moyenne chez les adultes varie de 0,2 à 1,5 mg par kilogramme de poids corporel par semaine. Chez les enfants et les jeunes, les taux d'exposition les plus élevés s'échelonnent de 0,7 à 2,3 mg par kilogramme de poids corporel. Compte tenu de la persistance de l'aluminium dans l'organisme, le groupe scientifique a estimé qu'il convenait d'établir une dose hebdomadaire tolérable, et a fixé celle-ci à 1 mg/kg de poids corporel/semaine. Le groupe scientifique a basé son évaluation sur les preuves combinées de plusieurs études animales démontrant des effets nocifs sur les testicules, les embryons et le système nerveux mature ou en développement suite à l'administration de composés d'aluminium alimentaire. Dans leur rapport de novembre 2003 « Evaluation des risques sanitaires liés à l'exposition de la population française à l'aluminium », l'Agence Française de Sécurité Sanitaire des Aliments, l'Institut de Veille Sanitaire et l'Agence Française de Sécurité Sanitaire des Produits de Santé avaient déjà estimé que pour l'exposition des matériaux au contact des aliments, la migration de l'aluminium aboutit à des expositions de l'ordre de 4 à 12 mg/kg d'aliments.

Il existe donc un besoin de supports ou de modification des procédés pour s'affranchir soit des opérations de transfert entre les différents moules utilisables, soit de l'utilisation de moules en aluminium.

L'objet de la présente invention est donc d'éliminer la contrainte de l'usage de moules, particulièrement ceux en aluminium, pour le fonçage et le cycle de vie des pâtes, notamment à tarte.

Pour ce faire plusieurs voies ont été explorées et notamment la solution décrite dans le brevet Carbon, US 3,425,363, intitulé « Pastry shell press », qui comprend un appareil de presse mécanique destiné au fonçage de fonds de tarte. Le système inclut un moule en position inférieure où le pâton est déposé et une matrice mobile supérieure complémentaire conférant sa forme au pâton après abaissement. Le système inclut un système de chauffage électrique, dont la température est suffisante pour assurer un séchage de la pâte suffisant afin d'éviter que celle-ci n'adhère au moule ainsi qu'à la matrice et une extrémité amovible permettant l'éjection du fond de tarte formé. Le fond ainsi formé est partiellement cuit ou séché et peut éventuellement être utilisé sans support.

Néanmoins cette dessiccation ou pré-cuisson par dessiccation présente des inconvénients notamment pour la suite des étapes de procédé comme la cuisson finale qui va être difficile à maîtriser par rapport au garnissage et qui va entraîner des difficultés pour maintenir de bonnes propriétés organoleptiques.

D'autres documents de l'art antérieur présentent des inventions relatives aux procédés de production de pâtes alimentaires. En exemple sont cités ci-après les documents WO 03/105592, EP 0 085 557.

La demande de brevet Peyrat, WO 03/105592, intitulé « Procédé de fabrication d'un produit intermédiaire surgelé pour tarte sucrée ou salée et produit intermédiaire ainsi obtenu », présente un procédé de préparation d'une pâte réalisé dans un four par une cuisson partielle de cette pâte mise en forme dans un moule où un contre-moule ajouré est utilisé pour maintenir en forme la pâte dans le moule tout en assurant une évacuation de la vapeur formée durant la cuisson partielle.

Le brevet Warren, EP 0 085 557, intitulé « Shelf-stable pastry shell and process », présente un procédé pour la conception d'une pâte cuite dans un plat de cuisson, avec adjonction de glycérine pour maintenir une texture élastique au produit.

Ces documents de l'art antérieur, pour la production d'une pâte alimentaire, ont en commun la nécessité d'utiliser une matrice métallique servant de moule recouvrant l'intégralité, ou quasi-intégralité, d'une des deux faces de la pâte mise en forme. De plus, cette matrice métallique sert aussi de réceptacle où demeure la pâte pendant les étapes de pré-cuisson ou cuisson.

De façon surprenante, le procédé selon l'invention, permet, tout en assurant une forme moulée, plastifiée et stable aux pâtes foncées, qu'elles puissent ensuite être garnies par des préparations de quiches, tourtes, tartes ou analogues et qu'elles puissent subir les étapes de cuisson puis éventuellement surgélation ou réfrigération sans avoir à être transférées dans des moules.

Le procédé selon la présente invention permet une stabilisation de la forme et un renforcement de ses propriétés mécaniques par un traitement à la vapeur de la pâte alimentaire, afin que la stabilité de celle-ci lui permette de subir les étapes de convoyage, de remplissage de garniture et de cuisson et surgélation ou réfrigération, sans qu'il y ait nécessité d'un support de type moule. De plus les produits obtenus selon le procédé satisfont aux critères organoleptiques.

La présente invention est relative à un procédé de fabrication d'un produit alimentaire défini comme une pâte, notamment un pâte dite à tarte, notamment la pâte feuilletée, la pâte brisée ou analogue, dont une modification de surface permet de lui conférer une forme dotée d'une propriété mécanique suffisante, notamment sous la forme d'un « moule en pâte » prêt à garnir ; permettant tant la facilitation de son convoyage, que d'éviter le phénomène de rétreint propre à ce type de produit après sa mise en forme ; tout en conservant les propriétés organoleptiques de la pâte, notamment son croustillant après cuisson.

Le procédé selon l'invention comprend notamment une étape de traitement à la vapeur extrêmement courte.

On connaît de l'art antérieur des procédés comprenant des étapes de traitement à la vapeur de pâtes, mais ces traitements sont en général destinés soit à éviter la dessiccation dans des fours vapeur soit à faire lever des pâtes comprenant des levures.

### Description

Aux fins de la présente description, on entend par « pâton », un morceau de pâte issu du pétrissage d'un mélange d'ingrédients, calibré aux fins de la formation d'une pâte à garnir, qui n'a pas encore été abaissé ou foncé.

On entend par « pâte » une préparation alimentaire plus ou moins consistante et souple, à base de farine et d'autres ingrédients divers (tels que eau, matières grasses, oeufs, condiments ou aromates), et pétrie, destinée à la cuisson pour faire du pain, des gâteaux ou divers mets salés ou sucrés. Le produit auquel s'applique plus particulièrement le procédé étant une pâte façonnée destinée à la confection de quiches, tourtes et tartes.

On entend par « cru » un aliment, notamment une pâte alimentaire, qui n'a pas connu d'étape de cuisson par dessiccation, notamment au sein d'un four, rendant ledit aliment propre à la consommation par le consommateur final.

On entend par « façonnage », les opérations de mise en forme de la pâte par formation d'une abaisse et le fonçage. Dans un procédé industriel, l'abaisse et le fonçage sont la plupart du temps exécutés en une étape. Une étape intermédiaire par passage dans un laminoir peut être effectuée pour avoir une épaisseur de pâte compatible avec les opérations suivantes comme le découpage des pâtons avant le fonçage. En fonction des procédés mis en oeuvre, l'abaisse lors du fonçage générera des chutes ou rognures qui seront éliminées. Dans certains procédés l'abaisse et le fonçage sont réalisés en une étape et aucune chute n'est à éliminer, l'abaisse étant réalisée concomitamment au fonçage directement dans le moule ou sur une forme permettant le transfert dans le moule sans génération de chutes ou rognures.

On entend par « moule en pâte » une pâte façonnée dont une forme de moule, de type moule pour quiche, tourte ou tarte, a été conférée. La forme de « moule en pâte » est de préférence conférée par les opérations de façonnage.

On entend par « levée » l'étape de fermentation due aux levures qui va libérer du CO₂ qui sera piégé dans le réseau de gluten ; il en résulte la levée de la pâte. Le moment de la levée est un moment indispensable. La pâte a en effet besoin de temps pour fermenter sous l'action de la levure. On peut accélérer la levée notamment par étuvage.

Le procédé selon l'invention consiste en la fabrication d'une pâte à tarte crue préformée et stabilisée,
caractérisé en ce qu'il comprend au moins :
a) une étape de formation d'un pâton constitué de pâte,
b) une étape de façonnage du pâton, pour obtenir une pâte façonnée,
c) une étape de traitement de la surface de la pâte façonnée, à la vapeur, pendant une durée comprise entre 5 et 90 secondes,
d) une étape de refroidissement d'au moins 60 secondes.

Dans un mode de réalisation l'invention consiste en un procédé de fabrication d'une pâte, caractérisé en ce qu'il comprend en outre une étape e) de retrait du support de fonçage.

Dans un mode de réalisation l'invention consiste en un procédé de fabrication d'une pâte, caractérisé en ce qu'il comprend en outre une étape e) de retrait du support de fonçage qui est un anneau de fonçage.

La réalisation de l'étape a) est effectuée à partir d'une pâte issue du pétrissage d'un mélange d'ingrédients, destinée à la confection de pâte alimentaire de type brisée, feuilletée ou analogue, qui est découpée selon un calibrage prédéfini pour former un pâton.

Lorsqu'il s'agit d'une pâte levée, la réalisation de l'étape a) est effectuée après la levée.

Il est en effet indispensable que la pâte ne lève plus lors du traitement à la vapeur, pour éviter un gonflement qui déformerait la pâte façonnée qui ne correspondrait plus aux formes et aux volumes prédéfinis par exemple pour la mise en place des garnitures.

Dans un mode de réalisation, le procédé comprend en outre avant l'étape a) de formation du pâton une étape de levée.

Les différents ingrédients entrant dans la composition de la pâte peuvent être :
- des farines : farines de blé, farines de riz, farines de maïs, farines d'avoine, seules ou en mélange ;
- de l'eau ou des solutions aqueuses ;
- des matières grasses : beurres, margarines, huiles végétales, seuls ou en mélange ;
- du sel ;
- du lait ou composants du lait ;
- des oeufs ;
- des levures, seuls ou en mélange.

La teneur totale en farine des pâtes selon l'invention est comprise entre 40 et 65 % en pourcentage du poids total de pâte.

Dans un mode de réalisation la pâte comprend entre 48 et 58 % en pourcentage du poids total de pâte de farine de blé.

Dans un mode de réalisation la pâte comprend entre 4 et 30 % en pourcentage du poids total de pâte de farine de maïs.

Dans un mode de réalisation la pâte comprend en outre entre 4 et 30 % en pourcentage du poids total de pâte de farine de riz.

Dans un mode de réalisation la pâte comprend en outre entre 5 et 20 % en pourcentage du poids total de pâte de farine d'avoine.

La composition de la pâte destinée à former le pâton comprend une ou plusieurs farine(s) dont la teneur en protéines est inférieure ou égale à 15 % en poids total des farines mises en oeuvre.

Dans un mode de réalisation, elle est inférieure ou égale à 10 % en poids total des farines mises en oeuvre.

Dans un mode de réalisation, le taux de protéines de la pâte est inférieur à 3 % en poids total de pâte.

Dans un mode de réalisation, le taux de protéines de la pâte est inférieur à 2,5 % en poids total de pâte.

Dans un mode de réalisation, la farine est une farine de blé dont la teneur en protéines est comprise entre 11 et 12 %.

Dans un mode de réalisation, le mélange de farines comprend en outre une farine de maïs dont la teneur en protéines est comprise entre 5 et 7 %.

Dans un mode de réalisation, le mélange de farines comprend en outre une farine de riz dont la teneur en protéine est comprise entre 5 et 6 %.

Dans un mode de réalisation, le mélange de farines comprend en outre une farine d'avoine dont la teneur en protéine est comprise entre 13 et 17 %.

Comme illustré dans les exemples, l'inventeur a en effet mis en évidence des défauts de rétreint en fonction de la teneur en protéines. Ce rétrécissement peut induire des irrégularités importantes sur la hauteur des pâtes foncées si la recette n'est pas adaptée. Ces irrégularités peuvent entraîner des malfaçons lors de l'étape de garnissage des pâtes foncées.

Dans un mode de réalisation, la composition de la pâte destinée à former le pâton comprend une ou plusieurs matière(s) grasse(s) dont la teneur est comprise entre 0 et 30 % en poids total du pâton.

Dans un mode de réalisation, les matières grasses sont choisies dans le groupe des margarines comprenant des huiles végétales.

Dans un mode de réalisation, les matières grasses sont choisies dans le groupe des beurres.

Dans un mode de réalisation, les matières grasses sont choisies dans le groupe des huiles végétales.

Dans un mode de réalisation, les huiles végétales sont choisies parmi les huiles de colza, de tournesol, d'olive seules ou en mélanges.

Dans un mode de réalisation, la teneur en matière grasse est comprise entre 5 et 10 %.

Dans un mode de réalisation, la teneur en matière grasse est comprise entre 15 et 25 %.

Dans un mode de réalisation, la teneur en matière grasse est nulle.

On notera qu'il s'agit de la matière grasse incorporée dans la pâte, donc ajoutée. La teneur n'est jamais nulle dans une pâte, dans la mesure où les autres constituants ne sont jamais exempts de matière grasse.

L'inventeur a en effet mis en évidence des difficultés techniques relatives à l'adhérence de la pâte au support de fonçage, lorsque le support utilisé pour foncer les pâtons est un anneau de fonçage caractérisé en ce que sa partie inférieure possède une jupe annulaire dont l'extrémité peut se terminer par un chanfrein orienté vers l'intérieur de l'anneau. Ce phénomène d'adhérence de la pâte au support induit des phénomènes de cassure de la préparation alimentaire cuite lorsqu'une pression mécanique est exercée en direction de la partie inférieure du support pour libérer la préparation du dit support.

La pâte obtenue selon ces caractéristiques de teneur en protéines et de teneur en matières grasses présente une plasticité nécessaire pour pouvoir être foncée sans se casser, tout en conservant les qualités organoleptiques du produit.

Dans un mode de réalisation, la teneur en eau est comprise entre 15 et 35 %.

Dans un mode de réalisation, la teneur en eau est comprise entre 20 et 30 %.

Dans un mode de réalisation, la teneur en sel est comprise entre 0 et 2,5 %, de préférence entre 0,5 et 2 %.

Dans un mode de réalisation, la teneur en lait ou composants du lait, est comprise entre 0 et 10 %.

Dans un mode de réalisation, les composants du lait sont choisis dans le groupe comprenant le lactose, les protéines de lait et le lait écrémé.

Dans un mode de réalisation, la teneur en oeufs ou produits issus d'oeufs est comprise entre 0 et 10 %.

Dans un mode de réalisation, la teneur en levures est comprise entre 0 et 8 %.

Dans un mode de réalisation, les levures sont choisies dans le groupe comprenant les levures chimiques et les levures dites de boulanger, lesdites levures de boulanger étant sous forme sèche instantanée, sèche active, fraîche en cubes, fraîche liquide.

Le pâton peut être obtenu par découpage d'une forme dans une laize de pâte, après une étape de laminage du produit issu du pétrissage du mélange initial.

Le découpage peut s'effectuer pour obtenir un pâton de forme cylindrique.

Le découpage est effectué de façon préférentielle pour obtenir un pâton de forme parallélépipédique. Ce mode de découpage limitant les pertes de produit issue de la laize de pâte initiale.

Dans un mode de réalisation, le pâton obtenu par laminage et découpage est idéalement calibré de telle sorte qu'il soit caractérisé par un poids compris entre 45 et 55 grammes afin qu'après l'étape de fonçage le diamètre de la tarte obtenu soit compris entre 90 et 100 millimètres.

Dans un mode de réalisation, le pâton obtenu par laminage et découpage peut être aussi idéalement calibré de telle sorte qu'il soit caractérisé par un poids compris entre 135 et 145 grammes afin qu'après l'étape de fonçage le diamètre de la tarte obtenu soit compris entre 196 et 200 millimètres.

Selon un mode de réalisation le pâton obtenu par laminage et découpage est caractérisé par une épaisseur comprise entre 8 et 15 millimètres, et dont les côtés mesurent entre 90 et 110 millimètres.

Selon un mode de réalisation, le pâton obtenu par laminage et découpage est caractérisé par une épaisseur d'environ 10 millimètres d'épaisseur, et dont les côtés mesurent 105 millimètres.

La réalisation de l'étape b) est effectuée par aplatissement du pâton en une pâte plane.

La pâte issue de l'étape b) de mise en forme a, de façon e, une forme plane dont les bords sont évasés afin de conférer à la pâte une forme dite de fond de tarte apte à recevoir une garniture.

Dans un mode de réalisation du procédé, l'étape b) de façonnage de la pâte est réalisée par fonçage mécanique d'un pâton dans un support qui est un anneau de fonçage.

Le fonçage mécanique peut être réalisé à l'aide d'une presse hydraulique, pneumatique ou ayant un vérin piloté par un cerveau moteur appelé presse mécanique. L'opération de pressage est divisée en cinq étapes, caractérisées en :
1) Début de cycle, la tête de pressage descend à grande vitesse en direction du pâton,
2) écrasement du pâton, la vitesse est contrôlée,
3) fin de l'écrasement progressive puis,
4) soufflage,
5) fin d'opération, remise en position comme en début d'opération, à vitesse contrôlée.

Au cours de cette opération de pressage, une collerette extérieure maintient le support en position pendant que la tête de pressage descend progressivement pour déformer le pâton afin de lui conférer sa forme finale de moule. Puis, la tête de pressage se retire en remontant, durant ce même temps de l'air est injecté par un procédé appelé soufflage pour faciliter le décollement de la tête de pressage vis-à-vis de la pâte préformée. En phase finale, la collerette extérieure remonte pour libérer le support et tout le système se remet en position initiale, prêt pour un nouveau cycle opératoire.

Le fonçage mécanique peut être réalisé à l'aide d'une tête de fonçage à pressage mécanique de type pas de vis à descente contrôlée.

La tête de fonçage est abaissée sur le pâton placé au centre du support.

Le procédé peut être réalisé par un système de presse où le pâton est placé entre deux matrices (l'une dite mâle, l'autre dite femelle) qui s'adaptent l'une à l'autre pour donner la forme de la pâte foncée au pâton.

L'anneau de fonçage est un outil de support destiné à conférer une forme à la pâte issue du pâton foncé. Cet anneau de fonçage comprend les éléments suivants :
- une paroi annulaire périphérique sensiblement verticale présentant une surface périphérique extérieure et une surface périphérique intérieure,
- une extrémité supérieure et une extrémité inférieure, la paroi annulaire s'étendant selon une hauteur depuis l'extrémité inférieure vers l'extrémité supérieure, la surface périphérique intérieure, les extrémités supérieure et inférieure, ainsi que la hauteur de la paroi annulaire périphérique définissant un espace intérieur du support destiné à recevoir la pâte alimentaire à foncer et à convoyer ;
- la paroi annulaire périphérique comportant une projection s'étendant depuis la surface périphérique intérieure au moins partiellement dans l'espace intérieur du support et formant jupe annulaire de maintien de la pâte alimentaire lors de son fonçage dans le support et de son transport une fois foncée.

Cet anneau de fonçage a un diamètre compris entre 70 et 300 millimètres.

Cet anneau de fonçage est caractérisé en ce qu'il recouvre moins de 30 % de la surface de la pâte foncée.

Cet anneau de fonçage ne recouvrant que moins de 30 % de la surface de la pâte foncée peut être un moule perforé dans sa partie inférieure.

Cet anneau de fonçage ne recouvrant que moins de 30 %, de préférence moins de 20 %, de la surface de la pâte foncée peut être, de manière e, un anneau dont la partie inférieure possède une jupe annulaire orientée vers l'intérieur de l'anneau, dont l'extrémité peut se terminer par un chanfrein. La longueur de cette jupe annulaire est comprise entre 10 et 30 millimètres, en rapport avec le diamètre de l'anneau de fonçage. L'épaisseur de l'extrémité de cette jupe annulaire, qui peut être un chanfrein, est comprise entre 0,1 et 0,5 millimètre.

Cet anneau de fonçage est caractérisé en ce qu'il permet un convoyage stable, et a également pour avantage notable de pouvoir être mis en oeuvre sans pièce ou dispositif complémentaire.

Dans un mode de réalisation du procédé, l'étape c) de traitement à la vapeur est effectuée par un apport en eau sous forme de vapeur soumise à une pression comprise entre 1,5 et 3,5 bars.

Selon un mode de réalisation du procédé, l'étape c) de traitement à la vapeur est effectuée par un apport en eau sous forme de vapeur à une température supérieure ou égale à 250°C et à un débit compris entre 300 et 700 Kg/h pendant une durée comprise entre 5 et 90 secondes.

Selon un mode de réalisation du procédé, l'étape c) de traitement à la vapeur est effectuée par un apport en eau sous forme de vapeur à une température supérieure ou égale à 250°C et à un débit compris entre 300 et 700 Kg/h pendant une durée inférieure à 30 secondes.

Selon un mode de réalisation du procédé, l'étape c) de traitement à la vapeur est effectuée par un apport en eau sous forme de vapeur à une température supérieure ou égale à 250°C et à un débit compris entre 300 et 700 Kg/h pendant une durée au maximum de 20 secondes.

Selon un mode de réalisation du procédé, l'étape c) de traitement à la vapeur est effectuée par un apport en eau sous forme de vapeur à une température supérieure ou égale à 250°C et à un débit compris entre 300 et 700 Kg/h pendant une durée au maximum de 10 secondes.

Selon un autre mode de réalisation du procédé, l'étape c) de traitement à la vapeur est effectuée par un apport en eau sous forme de vapeur à une température supérieure ou égale à 250°C et à un débit compris entre 300 et 500 Kg/h pendant une durée comprise entre 5 et 90 secondes.

Selon un autre mode de réalisation du procédé, l'étape c) de traitement à la vapeur est effectuée par un apport en eau sous forme de vapeur à une température supérieure ou égale à 250°C et à un débit compris entre 300 et 500 Kg/h pendant une durée inférieure à 30 secondes.

Selon un autre mode de réalisation du procédé, l'étape c) de traitement à la vapeur est effectuée par un apport en eau sous forme de vapeur à une température supérieure ou égale à 250°C et à un débit compris entre 300 et 500 Kg/h pendant une durée au maximum de 20 secondes.

Selon un autre mode de réalisation du procédé, l'étape c) de traitement à la vapeur est effectuée par un apport en eau sous forme de vapeur à une température supérieure ou égale à 250°C et à un débit compris entre 300 et 500 Kg/h pendant une durée au maximum de 10 secondes.

Dans un mode de réalisation du procédé, l'étape c) de traitement à la vapeur est effectuée par un apport en eau sous forme de vapeur à une température supérieure ou égale à 250°C et à un débit compris entre 500 et 700 Kg/h pendant une durée comprise entre 5 et 90 secondes.

Dans un mode de réalisation du procédé, l'étape c) de traitement à la vapeur est effectuée par un apport en eau sous forme de vapeur à une température supérieure ou égale à 250°C et à un débit compris entre 500 et 700 Kg/h pendant une durée inférieure à 30 secondes.

Dans un mode de réalisation du procédé, l'étape c) de traitement à la vapeur est effectuée par un apport en eau sous forme de vapeur à une température supérieure ou égale à 250°C et à un débit compris entre 500 et 700 Kg/h pendant une durée au maximum de 20 secondes.

Dans un mode de réalisation du procédé, l'étape c) de traitement à la vapeur est effectuée par un apport en eau sous forme de vapeur à une température supérieure ou égale à 250°C et à un débit compris entre 500 et 700 Kg/h pendant une durée au maximum de 10 secondes.

Selon un mode de réalisation du procédé, l'étape c) de traitement à la vapeur est effectuée par un apport en eau sous forme de vapeur à une température comprise entre 100°C et 250°C et à un débit compris entre 300 et 700 Kg/h pendant une durée comprise entre 5 et 90 secondes.

Selon un autre mode de réalisation du procédé, l'étape c) de traitement à la vapeur est effectuée par un apport en eau sous forme de vapeur à une température comprise entre 100°C et 250°C et à un débit compris entre 300 et 700 Kg/h pendant une durée inférieure à 30 secondes.

Selon un autre mode de réalisation du procédé, l'étape c) de traitement à la vapeur est effectuée par un apport en eau sous forme de vapeur à une température comprise entre 100°C et 250°C et à un débit compris entre 300 et 700 Kg/h pendant une durée au maximum de 20 secondes.

Selon un mode de réalisation du procédé, l'étape c) de traitement à la vapeur est effectuée par un apport en eau sous forme de vapeur à une température comprise entre 100°C et 250°C et à un débit compris entre 300 et 700 Kg/h pendant une durée au maximum de 10 secondes.

Selon un mode de réalisation du procédé, l'étape c) de traitement à la vapeur est effectuée par un apport en eau sous forme de vapeur à une température comprise entre 100°C et 250°C et à un débit compris entre 300 et 500 Kg/h pendant une durée comprise entre 5 et 90 secondes.

Selon un autre mode de réalisation du procédé, l'étape c) de traitement à la vapeur est effectuée par un apport en eau sous forme de vapeur à une température comprise entre 100°C et 250°C et à un débit compris entre 300 et 500 Kg/h pendant une durée inférieure à 30 secondes.

Selon un autre mode de réalisation du procédé, l'étape c) de traitement à la vapeur est effectuée par un apport en eau sous forme de vapeur à une température comprise entre 100°C et 250°C et à un débit compris entre 300 et 500 Kg/h pendant une durée au maximum de 20 secondes.

Selon un autre mode de réalisation du procédé, l'étape c) de traitement à la vapeur est effectuée par un apport en eau sous forme de vapeur à une température comprise entre 100°C et 250°C et à un débit compris entre 300 et 500 Kg/h pendant une durée au maximum de 10 secondes.

Dans un mode de réalisation du procédé, l'étape c) de traitement à la vapeur est effectuée par un apport en eau sous forme de vapeur à une température comprise entre 100°C et 250°C et à un débit compris entre 500 et 700 Kg/h pendant une durée comprise entre 5 et 90 secondes.

Dans un mode de réalisation du procédé, l'étape c) de traitement à la vapeur est effectuée par un apport en eau sous forme de vapeur à une température comprise entre 100°C et 250°C et à un débit compris entre 500 et 700 Kg/h pendant une durée inférieure à 30 secondes.

Dans un mode de réalisation du procédé, l'étape c) de traitement à la vapeur est effectuée par un apport en eau sous forme de vapeur à une température comprise entre 100°C et 250°C et à un débit compris entre 500 et 700 Kg/h pendant une durée au maximum de 20 secondes.

Dans un mode de réalisation du procédé, l'étape c) de traitement à la vapeur est effectuée par un apport en eau sous forme de vapeur à une température comprise entre 100°C et 250°C et à un débit compris entre 500 et 700 Kg/h pendant une durée au maximum de 10 secondes.

L'étape c) de traitement à la vapeur est caractérisée par un temps de traitement extrêmement court afin d'obtenir l'effet technique recherché qui est une stabilisation de la forme et un renforcement des propriétés mécaniques de la pâte alimentaire.

Selon un mode de réalisation la surface de contact entre la pâte foncée et la vapeur est supérieure ou égale à 70 % de la surface totale de la pâte.

Selon un mode de réalisation la surface de contact entre la pâte foncée et la vapeur est supérieure ou égale à 80% de la surface totale de la pâte.

Ce traitement à la vapeur induit une modification de la structure de surface de la pâte et de l'arrangement des grains d'amidon. A savoir qu'une partie de l'amylase et de l'amylopectine constituant l'amidon de surface est passée en solution sur une épaisseur d'environ 300 µm.

Le traitement de surface est donc effectué sur une épaisseur comprise entre 200 et 500 µm.

En effet si le traitement est poursuivi, les qualités organoleptiques du produit fini après cuisson classique seront altérées, perte du croustillant, sensation de résistance élastique.

Dans un mode de réalisation, le traitement à la vapeur est effectué sur 80 % de la surface de la pâte façonnée.

Dans un mode de réalisation, lors du traitement à la vapeur, la pâte façonnée est maintenue dans un support.

Dans un mode de réalisation, le support masque moins de 30 % de la surface de la pâte façonnée.

Dans un mode de réalisation, le support masque moins de 20 % de la surface de la pâte façonnée.

Dans un mode de réalisation, le support masque moins de 15 % de la surface de la pâte façonnée.

Dans un mode de réalisation, le support est un plat ajouré.

Dans un mode de réalisation, le support est un anneau de fonçage.

Dans un mode de réalisation, le support est un plat perforé.

Dans un mode de réalisation, le support est constitué d'une grille ajourée.

Dans un mode de réalisation du procédé, l'étape d) de refroidissement s'effectue à température ambiante pendant une durée d'au moins 60 secondes.

Dans un mode de réalisation du procédé, l'étape d) de refroidissement, est effectuée à température ambiante pendant une durée d'environ 60 secondes.

Dans un mode de réalisation du procédé, l'étape d) de refroidissement s'effectue à température ambiante pendant une durée d'au moins 5 minutes.

Dans un mode de réalisation du procédé, l'étape d) de refroidissement s'effectue à température ambiante pendant une durée d'au moins 10 minutes.

Dans un mode de réalisation du procédé, l'étape d) de refroidissement, est effectuée à température ambiante pendant une durée d'au moins 20 minutes.

L'étape d) de refroidissement peut être effectuée par l'intermédiaire d'un flux d'air pulsé dirigé en direction du produit généré par le présent procédé. Ce flux d'air peut par exemple être généré par un système de ventilateur, et être de température égale ou inférieure à la température ambiante.

Dans un autre mode de réalisation du procédé, l'étape d) de refroidissement s'effectue à une température comprise entre 0°C et 10°C pendant une durée d'au moins 30 secondes.

Dans un mode de réalisation du procédé, l'étape d) de refroidissement s'effectue à une température comprise entre 0°C et 10°C pendant une durée de 30 à 180 secondes.

Dans un mode de réalisation du procédé, l'étape d) de refroidissement, est effectuée à une température comprise entre 0°C et 10°C pendant une durée d'au moins 60 secondes.

Dans un autre mode de réalisation du procédé, l'étape d) de refroidissement s'effectue à une température comprise entre 0°C et 5°C pendant une durée d'au moins 30 secondes.

Dans un mode de réalisation du procédé, l'étape d) de refroidissement s'effectue à une température comprise entre 0°C et 5°C pendant une durée de 30 à 180 secondes.

Dans un mode de réalisation du procédé, l'étape d) de refroidissement, est effectuée à une température comprise entre 0°C et 5°C pendant une durée d'au moins 60 secondes.

Cette étape de refroidissement induit un phénomène biophysique qui consolide et stabilise la structure de surface de la pâte, induisant un durcissement mécanique du produit, tout en conservant les qualités organoleptiques de celui-ci.

La résistance ainsi induite par le présent procédé permet au produit de résister à la poussée verticale et horizontale induite par l'incorporation d'une garniture dans le moule en pâte, et d'assurer une résistance aux diverses forces de frottement induites lors du convoyage du produit.

La résistance mécanique induite par le durcissement de surface selon le présent procédé est multipliée par un facteur d'environ 5,5.

Le produit obtenu selon le procédé, est une pâte façonnée dont la surface a été traitée à la vapeur sur une épaisseur comprise entre 200 et 500 µm.

Dans un mode de réalisation la pâte façonnée a été traitée en surface à la vapeur sur une épaisseur de 300 µm.

Le procédé selon l'invention se distingue notamment du brevet US 6,365,210 B1 qui utilise de la vapeur d'eau sur une pâte à pizza préformée, où l'effet technique recherché est un accroissement du degré d'humidité présent dans la pâte, rendant ainsi celle-ci plus moelleuse à l'intérieur après cuisson. Afin de réaliser cet effet technique, cet art antérieur divulgue un passage pendant environ 35 secondes de la pâte à pizza préformée dans un appareil où la vapeur est présente à une température d'environ 57°C et préférentiellement 70°C.

Le procédé selon l'invention se distingue aussi notamment du brevet US 2,767,667 dont l'utilisation de la vapeur a pour objet technique de maintenir une surface lisse et homogène lors du phénomène de levée de la pâte, par exemple de la pâte à pain, lors de la cuisson. Ceci afin que le produit présente un aspect « lisse et brillant » après cuisson.

Le procédé selon l'invention se distingue également du document US 5,236,724 dans lequel est décrit un procédé de traitement à la vapeur d'un bagel fourré au fromage, appliqué après une étape de gonflement de la pâte, et destiné à lisser la surface de la pâte du bagel avant la cuisson.

On connaît également du document WO 99/51100 un procédé de traitement à la vapeur d'une pâte à pain, destiné à réduire le temps de levée de la pâte et le temps de cuisson. En effet, les effets techniques décrits sont un apport de chaleur et d'humidité permettant une accélération du gonflement de la pâte par l'action de la levure, d'éviter que la surface de la pâte ne se dessèche, et de réduire le temps de cuisson par amélioration du taux de transfert de la chaleur à l'intérieur du produit.

Un procédé de traitement à la vapeur d'une pâte comprenant de la levure ou un agent de gonflement chimique est également connu du document EP 0 824 863. Le procédé est appliqué à des pâtes destinées à gonfler, du type pâte à pain, et est appliqué durant la première partie de l'étape de cuisson du produit. Les objectifs techniques de cet apport en vapeur au début de la cuisson de la pâte sont notamment d'améliorer la levée et l'expansion de celle-ci, d'améliorer le taux de transfert de la chaleur vers l'intérieur du produit, et de préserver la texture moelleuse du produit.

Ces documents décrivent tous une action de la vapeur sur les caractéristiques propres aux pâtes levées, par une amélioration de l'efficacité des agents de gonflement, ou par un effet lissant de la surface après une étape de gonflement.

Lorsqu'il est appliqué à une pâte alimentaire comprenant de la levure, ou un agent levant, le procédé selon l'invention est appliqué après que l'étape de levée de la pâte par le processus de fermentation se soit produite. L'étape a) de formation d'un pâton constitué de pâte est donc appliquée à une pâte qui a au préalable levé.

En effet, l'étape a) ayant précédemment été décrite comme un découpage selon un calibrage prédéfini pour former un pâton, ce calibrage prédéfini ne peut s'appliquer qu'à un pâton dont le volume et la forme n'évolueront plus de manière significative. Ceci serait en effet le cas d'une pâte comprenant une levure, ou un agent levant, dont l'étape préalable de gonflement ne serait pas respectée.

Il est important de relever que l'objectif technique recherché par le procédé selon l'invention est une stabilisation de la forme et un renforcement des propriétés mécaniques de la pâte alimentaire. En conséquence, une pâte alimentaire comprenant de la levure devra au préalable avoir levé, puis avoir été façonnée, avant que ne soit appliquée l'étape c) de traitement de la surface de la pâte façonnée à la vapeur du procédé selon l'invention.

Cette caractéristique est d'autant plus importante dans le domaine de la production industrielle où les volumes de garnitures destinées à remplir les pâtes façonnées sont prédéfinis. Ces volumes constants de garnitures impliquent nécessairement un besoin de stabilité de la forme de la pâte façonnée, et donc l'exclusion d'une levée par fermentation après la mise en forme.

Comme précisé précédemment, il sera également relevé que l'étape c) de traitement à la vapeur se distingue de l'art antérieur par une application extrêmement courte dans le temps.

Cette pâte façonnée selon l'invention peut être désolidarisée du support de moulage, pour subir une nouvelle étape industrielle. Ce produit, qui peut être qualifié de « moule en pâte », possède une rigidité suffisante pour être transféré, convoyé et être utilisé comme support de garniture sans perdre sa forme, et sans problématique de cassure ou brisure de la pâte.

Le produit désolidarisé du support peut être immédiatement cuit, puis réfrigéré ou surgelé, pour servir de « moule en pâte » prête à garnir. La garniture pouvant, par exemple, être une préparation pour quiche, tourte ou tarte.

Selon un mode de réalisation le moule en pâte garni est cuit au four à une température comprise entre 180 et 270°C pendant 7 à 15 minutes, l'homme de l'art sachant adapter la température et le temps de cuisson en fonction de la composition de la préparation culinaire.

De façon surprenante, il a été remarqué par les inventeurs que le produit obtenu à partir du procédé selon la présente invention ne présentait plus les problématiques de rétreint communément observées. En effet, les pâtes alimentaires ont tendance, après leur mise en forme aplanie, à se rétracter vers leur centre. Ce phénomène, communément appelé rétreint, est un problème en cuisine ou dans l'industrie alimentaire car il implique l'usage nécessaire d'une contre-force compensant ce phénomène de rétreint, par exemple par l'usage d'un contre-moule maintenant les bords de la pâte.

Les pâtes crues et foncées selon le mode de la présente invention, avec l'emploi d'un support qui est un anneau, dont le diamètre est compris entre 70 et 300 millimètres, dont la partie inférieure possède une jupe annulaire dont l'extrémité peut se terminer par un chanfrein orienté vers l'intérieur de l'anneau, dont la longueur de cette jupe annulaire est comprise entre 10 et 30 millimètres, et dont l'épaisseur de l'extrémité de cette jupe annulaire, qui peut être un chanfrein, est comprise entre 0,1 et 0,5 millimètre, ne présentent peu ou plus ce phénomène de rétreint. Cette caractéristique technique est d'autant plus intéressante qu'elle implique que l'usage de pâtons de forme parallélépipédique selon le présent procédé n'aura plus tendance à causer un phénomène de rétreint de la pâte vers une forme carrée ou rectangulaire. Le découpage de pâtons de forme parallélépipédique dans une laize de pâte, implique une perte en matériel nulle ou quasi-nulle par rapport au découpage en forme de pâtons en forme de cylindre. En effet, ce dernier mode de découpage implique la perte en matière interstitielle, communément appelée « des chutes » dans le langage culinaire, entre les différents cylindres découpés sur une même laize.

### Brève Description des Figures

L'invention sera mieux comprise en se référant utilement à la description détaillée de l'exemple d'un support, qui est un anneau de fonçage, selon le mode de réalisation de la présente invention, ainsi qu'aux figures en annexe, le tout donné à titre d'illustrations, et dans lesquelles :
- La Figure 1 représente une vue schématique de dessus d'un support utilisé selon le mode de réalisation de la présente invention ;
- La Figure 2 représente une vue schématique en coupe selon l'axe A-A' du support selon la Figure 1 ;
- La Figure 3a représente une vue schématique en coupe d'une partie du support utilisé selon le mode de réalisation de la présente invention ;
- La Figure 3b représente une vue agrandie d'une partie d'une projection formant jupe annulaire du support de la Figure 3a ;

Comme illustré par les figures, l'exemple d'un support selon le mode de réalisation de la présente invention se présente sous forme d'un anneau en forme de cercle, lorsqu'on l'observe de dessus.

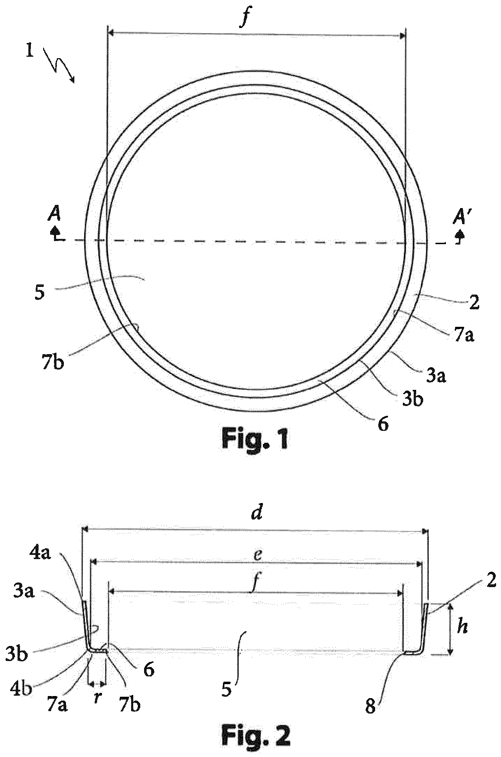

Tel que présenté à la Figure 1, le support 1 comporte une paroi annulaire périphérique sensiblement verticale 2, présentant une surface périphérique extérieure 3a, et une surface périphérique intérieure 3b. La paroi annulaire périphérique comporte également une extrémité supérieure 4a et une extrémité inférieure 4b. Les extrémités supérieure 4a et inférieure 4b forment, avec la surface périphérique intérieure 3b un espace intérieure 5 du support. Dans le présent exemple, l'espace intérieur 5 communique avec l'atmosphère extérieure entourant le support 1, puisque comme illustré à la Figure 1, le support présente une ouverture supérieure et une ouverture inférieure, de diamètre inférieur au diamètre de l'ouverture supérieure. Au niveau de l'extrémité inférieure 4b, il est prévu une projection 6 formant jupe annulaire. La jupe annulaire prolonge la paroi annulaire 2, d'épaisseur m, depuis une extrémité périphérique 7a, de manière perpendiculaire ou quasi-perpendiculaire à cette dernière, vers l'espace intérieur 5 du support, rentrant au moins partiellement dans cet espace et se terminant par une extrémité intérieure 7b. Le diamètre intérieur *f* identifié à la Figure 1 correspond au diamètre d'un cercle formé par l'extrémité intérieure 7b de la jupe. Le plan de coupe délimité par les repères A et A' indique la coupe réalisée pour visualiser le plan de côté de la Figure 2.

La Figure 2 représente une vue schématique en coupe d'un support utilisé selon le mode de réalisation de la présente invention et selon le plan de coupe A-A' de la Figure 1 et dans laquelle les références numériques sont identiques à celles de la Figure 1. Ce que l'on observe en outre, est l'indication de la hauteur h de la paroi annulaire périphérique 2, ainsi que la longueur de la projection formant jupe annulaire 6 par la lettre r. La lettre d désigne le diamètre du cercle défini par l'extrémité supérieure 4a de la paroi annulaire périphérique 2 sensiblement verticale du support. La lettre e désigne le diamètre du cercle défini par l'extrémité inférieure 4b de la paroi annulaire périphérique 2 sensiblement verticale du support. On remarque également que la projection 2 formant jupe annulaire comporte, entre l'extrémité périphérique 7a et l'extrémité intérieure 7b, un chanfrein 8.

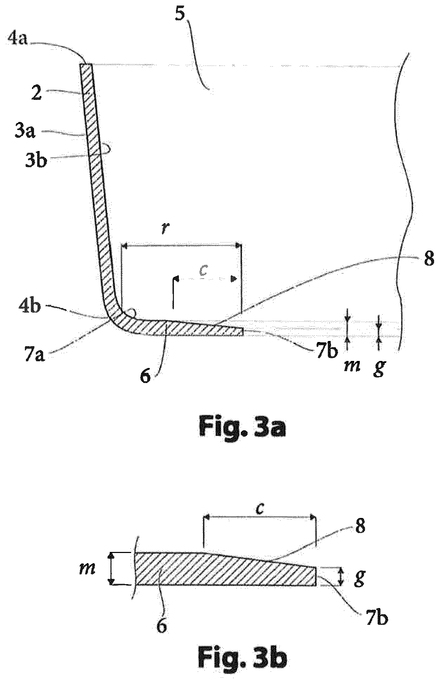

Selon un mode d'exécution d'un support, utilisé dans le mode de réalisation de la présente invention, représenté à la Figure 3a, on présente un agrandissement partiel de la Figure 2, dans lequel un côté de l'objet est illustré où la paroi annulaire périphérique 2 sensiblement verticale du support 1 est prolongée par la projection 6 formant jupe annulaire. Une partie en vue agrandie de cette projection 6 formant jupe annulaire est présentée en Figure 3b. La projection formant jupe annulaire se prolonge à partir de l'extrémité périphérique 7a (non illustrée) en direction de l'extrémité intérieure 7b, et comporte un chanfrein 8, ou biseau, s'étendant vers l'extrémité intérieure 7b. La lettre r désigne la longueur totale de la projection 6 formant jupe annulaire, chanfrein y compris, alors que la lettre c désigne la longueur du chanfrein 8 proprement dit. La lettre *g* désigne l'épaisseur du chanfrein 8 à l'extrémité intérieure 7b qui, comme on peut le voir dans la Figure 3b, diminue progressivement à partir d'une épaisseur m en direction de ladite extrémité intérieure 7b, et qui ne se termine pas en pointe dans ce mode d'exécution.

Selon le mode de réalisation de la présente invention, le support de l'invention, qui est un anneau de fonçage, possède des dimensions telles que :
- d est égale à 200 millimètres ;
- e est égale à 195 millimètres ;
- r est égale à 20 millimètres ;
- f est égale à 175 millimètres ;
- *h* est égale à 23 millimètres ;
- c est égale à 5,5 millimètres ;
- m est égale 1 millimètre ;
- *g* est égale à 0,5 millimètre.

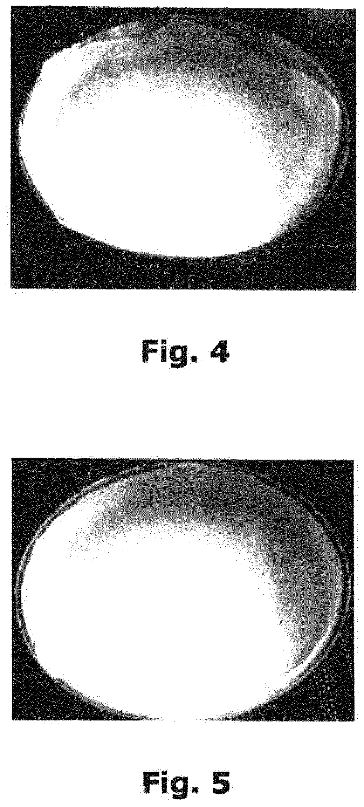

L'invention sera également mieux comprise en se référant utilement aux photographies de la Figure 4 et de la Figure 5, données à titre d'illustrations, et représentant :
- Figure 4 : Photographie d'une pâte façonnée après pressage. La photographie est effectuée entre 3 et 10 secondes après le pressage. Recette avec 14,2 kg de farine de blé montrant le phénomène de retreint. La teneur en protéines est ≥ 3,2 g par 100 g de pâte. La pâte est réalisée avec de la farine d'origine française d'un taux de protéine moyen de 10 g de protéines par 100 g de farine, soit 10%.
- Figure 5 : Photographie d'une pâte façonnée après pressage. La photographie est effectuée entre 3 et 10 secondes après le pressage. Recette avec 12 kg de farine de blé avec l'obtention d'un moule en pâte régulier, sans phénomène de retreint. La teneur en protéines est ≤ 2,3 g par 100 g de pâte. La pâte est réalisée avec de la farine d'origine française d'un taux de protéine moyen de 10 g de protéines par 100 g de farine, soit 10%.

### Exemples

Six exemples de compositions de pâtes alimentaires pouvant être traitées selon le procédé sont décrits ci-après.

### Exemple 1

Préparation d'une pâte brisée pour une préparation totale pesant 100,15 kg

| Libellé | Poids (kg) |
|---|---|
| Farine de blé (11 à 12 % teneur en protéines) | 54,4 |
| Farine de riz (5 à 6 % teneur en protéines) | 5,1 |
| Sel fin | 0,65 |
| Mélange en poudre : lactose, protéine de lait et lait écrémé (21 % teneur en protéines) | 5 |
| Huile de Colza | 10,4 |
| Euf liquide frais (12 % teneur en protéines) | 6,5 |
| Eau | 18,1 |

### Exemple 2

Préparation d'une pâte brisée pour une préparation totale pesant 100 kg

| Libellé | Poids (kg) |
|---|---|
| Farine de blé (11 à 12 % teneur en protéines) | 48 |
| Farine d'Avoine (13 à 17 % teneur en protéines) | 12 |
| Sel fin | 2 |
| Beurre | 6 |
| Huile de tournesol | 7 |
| Eau | 25 |

### Exemple 3

Préparation d'une pâte brisée sans gluten pour une préparation totale pesant 100,75 kg

| Libellé | Poids (kg) |
|---|---|
| Farine de Maïs (5 à 7 % teneur en protéines) | 28 |
| Farine de riz (5 à 6 % teneur en protéines) | 28 |
| Sel fin | 0,75 |
| Margarine | 25 |
| Eau | 19 |

### Exemple 4

Préparation d'une pâte feuilletée pour une préparation totale pesant 100 kg

| Libellé | Poids (kg) |
|---|---|
| Farine de blé (11 à 12 % teneur en protéines) | 51 |
| Sel fin | 1 |
| Beurre | 20 |
| Eau | 28 |

### Exemple 5

Préparation d'une pâte feuilletée pour une préparation totale pesant 100 kg

| Libellé | Poids (kg) |
|---|---|
| Farine de blé (11 à 12 % teneur en protéines) | 51 |
| Sel fin | 1 |
| Margarine | 23 |
| Eau | 25 |

### Exemple 6

Préparation d'une pâte à pizza pour une préparation totale pesant 171,5 kg

| Libellé | Poids (kg) |
|---|---|
| Farine de blé (11 à 12 % teneur en protéines) | 100 |
| Sel fin | 2 |
| Levure | 4,5 |
| Amidon de blé | 10 |
| Eau | 55 |

### Exemple 7

Mise en évidence de la diminution des phénomènes de retreint

Ce phénomène de rétreint est observé au niveau des bords de la pâte entre 3 à 10 secondes après le fonçage.

Lors de l'application de la force mécanique, l'énergie cinétique stockée par la pâte provoque un rétrécissement de celle-ci.

Ce rétrécissement induit des irrégularités importantes sur la hauteur des pâtes foncées si la recette n'est pas adaptée. Ces irrégularités peuvent notamment induire des malfaçons lors de l'étape de garnissage des pâtes foncées.

Deux séries de pâtes ont été réalisées avec de la farine française comprenant un taux moyen de protéines de 10 g pour 100 g de farine.

Lorsque le taux de protéines total de la pâte est supérieur à 3 % un rétreint important est observé, lorsque ce taux est inférieur à 3 %, aucun rétreint n'est observé. Voir Figures 4 et 5

### Exemple 8

Mise en évidence de la résistance mécanique de la pâte façonnée ayant subi le traitement à la vapeur ou « moule en pâte », et qui a été retirée de l'anneau de fonçage.

Un essai de résistance de la pâte ayant subi le présent procédé, en mesurant la masse humide pouvant être incorporée dans le fond de tarte formée selon le procédé, et qui a été retiré de l'anneau de fonçage, avant un affaissement des bords de ce fond de tarte a été effectué en comparaison avec un fond de tarte identique n'ayant pas subi le traitement à la vapeur.

Les fonds de tarte testés ont un diamètre de 200 millimètres et une hauteur de 30 millimètres.

La masse humide ajoutée est une composition pour garniture de type quiche bien connue de l'homme de l'art.

Une résistance des bords du fond de tarte obtenu selon le procédé jusqu'à incorporation de 500 grammes de matière humide a été mesurée.

Une résistance des bords du fond de tarte n'ayant pas subi le procédé jusqu'à seulement 90 grammes de matière humide a été mesurée.

La résistance mécanique induite par le durcissement de surface selon le présent procédé est donc multipliée par un facteur d'environ 5,5.

### Exemple 9

Exemple de mise en oeuvre de la succession d'étapes techniques selon le procédé appliqué à l'une quelconque des pâtes alimentaires décrites précédemment.

### Laminage et découpage de la pâte alimentaire.

La pâte est laminée afin de lui conférer une surface plane d'environ 10 millimètres d'épaisseur.

Cette pâte laminée est découpée en pâtons d'environ 105 millimètres de côtés et d'environ 10 millimètres d'épaisseur.

### Fonçage du pâton.

Un anneau de support est déposé sur le convoyeur de la ligne de production selon des repères prédéfinis. Ces repères tridimensionnels permettent d'assurer une stabilité de l'anneau, évitant ainsi un quelconque déplacement latéral. Un pâton est déposé au sein de cet anneau.

Les dimensions de l'anneau de support sont de 200 millimètres de diamètre en son extrémité supérieure, de 195 millimètres de diamètre en son extrémité inférieure et de 23 millimètres de hauteur, il dispose d'une jupe annulaire en position inférieure et dirigée vers l'intérieur du support sur une longueur de 20 millimètres.

Une presse de fonçage descend vers l'anneau contenant le pâton. Au cours de la descente, l'anneau est maintenu immobile et plaqué contre le convoyeur par une collerette extérieure de la presse. Avec un décalage dans le temps, la tête de fonçage presse enfin le pâton parallélépipédique pour lui conférer sa forme finale qui est un moule en pâte. L'ensemble anneau et moule en pâte est libéré par remontée de la presse, remontée accompagnée d'un soufflage consistant à envoyer de l'air afin d'éviter tout phénomène d'adhérence de la pâte à la presse.

### Procédé de traitement à la vapeur.

Le convoyeur amène l'ensemble anneau et moule en pâte sous un pulvérisateur de vapeur afin que de la vapeur d'eau soit pulvérisée de telle sorte que la température ambiante soit de 250°C et à un débit de 500 kg/h pendant une durée de 20 secondes. Un temps de refroidissement d'environ 60 secondes à une température de 4°C réalisant le thermodurcissage est ensuite respecté.

### Garnissage et cuisson

Par pression mécanique exercée sous le moule en pâte, celui-ci est retiré de l'anneau support.

Le moule en pâte est garni d'une préparation alimentaire de type quiche, tourte ou tarte, biens connues de l'homme de l'art.

Le moule en pâte garni est cuit au four à une température de 200°C pendant 10 minutes.

### Conditionnement

La préparation cuite est refroidie et conditionnée selon les méthodes connues de l'homme de l'art, telle que le conditionnement sous film pastique et l'emballage en étui carton, puis expédiée afin d'être commercialisée.

Exemple d'une technique de fonçage alternative adaptée au procédé.

Une technique de fonçage alternative possible consiste à procéder à ce qui pourrait être qualifié de fonçage à l'envers. Celle-ci s'effectue selon les étapes suivantes :
- le pâton est placé sur une structure dite mâle, qui est destinée à conférer sa forme à la pâte foncée lorsque celle-ci sera moulée autour d'elle ;
- une structure dite femelle, complémentaire à la structure mâle, s'abaisse sur le pâton et l'étale autour de la structure mâle, la pâte alimentaire foncée ainsi obtenue est donc à l'envers ;
- la structure femelle remonte de telle sorte que la pâte alimentaire foncée demeure sur la structure mâle ;
- le support anneau est placé à l'envers sur la pâte alimentaire foncée qui est toujours à l'envers elle aussi ;
- l'ensemble constitué par la structure mâle, la pâte alimentaire foncée et l'anneau, est retourné ;
- la structure mâle remonte de telle sorte que la pâte alimentaire foncée demeure solidaire du support anneau.

La pâte foncée selon cette technique de fonçage alternative peut subir les étapes suivantes du procédé telles que définies dans l'exemple précédent.

L'un des avantages de cette technique alternative est de pouvoir appliquer une étape constituant en le procédé de traitement vapeur avant le retournement de l'ensemble constitué par la structure mâle, la pâte alimentaire foncée et l'anneau. Puis, après retournement et remontée de la structure mâle, l'autre face de la pâte peut aussi subir le procédé de traitement vapeur. Par ce double passage au traitement vapeur, la totalité de la pâte alimentaire foncée peut ainsi être thermodurcie en surface.

Un autre avantage technique est que la position de fonçage à l'envers, suivi d'une étape de procédé vapeur, permet de diminuer le phénomène de rétreint des bords de la pâte alimentaire foncée. En effet, dans cette position de fonçage à l'envers, la force de gravité n'est pas appliquée dans le sens poussant les bords de la pâte alimentaire foncée en direction du centre de celle-ci.

### Exemple 10

### Test de résistance de la pâte alimentaire cuite.

La résistance mécanique du produit obtenu selon le procédé après cuisson a une importance industrielle, notamment en relation avec la palettisation et le transport du dit produit.

Un essai de résistance est effectué par évaluation visuelle de la quantité de cassures des bords de pâte alimentaire de produits garnis et cuits selon l'exemple précédent, après soumission à des contraintes mécaniques en conditions réelles d'exploitation. Les résultats sont comparés à des produits issus de préparations de pâtes alimentaires identiques, mais préparés et conditionnés dans un moule en aluminium, sans traitement à la vapeur selon l'invention, puis soumis aux mêmes contraintes mécaniques.

Les produits utilisés durant l'essai sont un panel de produits alimentaires de type quiches, tourtes et tartes, d'un poids compris entre 135 et 145 grammes. Les produits sont garnis, cuits, puis surgelés. Ils sont ensuite conditionnés avec un film plastique pour les emballer individuellement, puis mis dans un étui en carton de 220 millimètres de côtés et de 30 millimètres de hauteur.

L'essai de résistance mécanique en conditions réelles d'exploitation consiste en la succession des étapes suivantes : une mise sur palettes de transports des produits conditionnés, le chargement des palettes dans un camion de transport, le transport des produits en camion, le déchargement au sol des palettes.

La configuration de palette ayant 5 produits dans la partie frontale, 24 produits dans le sens de la largeur et 7 couches de produits en hauteur. Ceci fait un total de 840 produits par palette.

Le protocole de transport en camion consiste à parcourir environ 561 kilomètres sur le réseau routier.

Lors de la charge et de la décharge des palettes, aucun dommage externe n'est constaté.

Pour la quantification des défauts de cassures dues au transport seul les deux couches inférieures des palettes ont été quantifiées. Les résultats obtenues selon les essais sont présentés et comparés à des produits avec moule aluminium dans le tableau présenté ci-après. Le nombre total de transports réalisés a été de 4 pour deux palettes soit : 2 chargements et 2 allers et retour avec 2 déchargements. Le nombre total des produits échantillonnés sans moule aluminium et réalisés selon le procédé a été de 504 ; et de 240 pour les produits avec moule aluminium et sans traitement à la vapeur.

Tableau présentant le nombre total de produits cassés en pâte brisée et feuilletée, comparés aux produits contenus dans un moule aluminium.

| | **Produits par couche** | | | | **Produits cassés** | | | |
|---|---|---|---|---|---|---|---|---|
| **Type de pâte** | Palette 1 | | Palette 2 | | Palette 1 | | Palette 2 | |
| | 1^{ère} | 2^{ème} | 1^{ère} | 2^{ème} | 1^{ère} | 2^{ème} | 1^{ère} | 2^{ème} |
| Brisée en moule aluminium | - | - | 120 | 120 | - | - | 8 | 10 |
| Brisée sans moule aluminium | 64 | 64 | 117 | 114 | 20 | 16 | 14 | 8 |
| Feuilletée sans moule aluminium | 72 | 64 | 3 | 6 | 1 | 1 | 0 | 0 |

Il est possible d'observer que les produits issus de pâte brisée selon le procédé sont les plus fragiles avec 58 produits cassés sur un total de 359 dans les deux palettes soit un taux de 16%. Dont 2 fois plus que le taux de casse constaté pour les produits contenus dans des moules en aluminium et n'ayant pas subi le traitement à la vapeur selon le procédé, soit un taux de 7,5% pour un total de 240 produits échantillonnés.

Finalement, ce sont les produits fabriqués en pâte feuilletée selon le procédé qui sont les plus résistants aux différentes contraintes mécaniques. En effet, lors du transport seuls 2 produits ont été cassés. L'échantillonnage a été réalisé sur un total de 145 produits avec un taux de casse de 1,4%. Soit 5 fois moins que celui des pâtes brisées contenues dans un moule en aluminium et n'ayant pas subi le traitement à la vapeur selon le procédé ; et 11 fois moins que celui des pâtes brisées selon le procédé.

### Exemple 11

Exemple de mise en oeuvre des étapes techniques selon le procédé à l'échelle industrielle appliqué à l'une quelconque des pâtes alimentaires décrites précédemment.

La mise en oeuvre de la succession d'étapes techniques selon le procédé est identique à celle décrite à l'exemple 9. Les paramètres spécifiques à l'étape « Procédé de traitement à la vapeur » ont été optimisés afin de correspondre aux besoins de cadence d'un processus industriel.

En effet, la cadence de production, exprimée en pièces par minute, dépend notamment de l'optimisation de cette étape. On entend par pièce une préparation de type quiche, tourte ou tarte qui est garnie, cuite, refroidie et conditionnée.

Les cadences de production suivantes ont fait l'objet d'essais :

Cadence de production de 84 pièces par minute : Le convoyeur amène l'ensemble anneau et moule en pâte sous un pulvérisateur de vapeur afin que de la vapeur d'eau soit pulvérisée de telle sorte que la température ambiante soit de 250°C et à un débit de 500 kg/h pendant une durée de 30 secondes. Un temps de refroidissement de 80 secondes à une température de 4°C réalisant le thermodurcissage est ensuite respecté. Le moule en pâte est retiré de l'anneau. Puis, le moule en pâte subit une étape de garniture puis de cuisson à sec dans un four thermique à 325°C pendant 8 minutes.
Dans ces conditions de production, les pourcentages de perte des produits suite à des ruptures ou des effondrements des pâtes est inférieur à 10%.

## Revendications

1. Procédé de fabrication d'une pâte à tarte crue préformée et stabilisée, **caractérisé en ce qu'**il comprend au moins :
a) une étape de formation d'un pâton constitué de pâte,
b) une étape de façonnage du pâton comprenant les opérations de mise en forme de la pâte par formation d'une abaisse et le fonçage, pour obtenir une pâte façonnée,
c) une étape de traitement de la surface de la pâte façonnée, à la vapeur , pendant une durée comprise entre 5 et 90 secondes,
d) une étape de refroidissement d'au moins 60 secondes.

2. Procédé selon la revendication 1, **caractérisé en ce que** l'étape de traitement à la vapeur est effectuée par un apport en eau sous forme de vapeur à une température comprise entre 100 et 250°C et à un débit compris entre 300 et 700 kg/h.

3. Procédé selon la revendication 2, **caractérisé en ce que** la durée d'exposition au traitement à la vapeur est inférieure à 30 secondes.

4. Procédé selon l'une quelconque des revendications précédentes, **caractérisé en ce que** le pâton comprend une ou plusieurs farine(s) dont la teneur en protéines est inférieure ou égale à 15% en poids total de farines.

5. Procédé selon l'une quelconque des revendications précédentes, **caractérisé en ce que** le support durant l'étape de traitement à la vapeur masque moins de 30 % de la surface de la pâte mise en forme.

6. Procédé selon la revendication 5, **caractérisé en ce que** le support est un anneau de fonçage.

7. Procédé selon la revendication 5, **caractérisé en ce que** le support est un moule perforé.

8. Procédé selon l'une quelconque des revendications précédentes, **caractérisé en ce que** le pâton est formé par découpage d'une forme dans une laize de pâte.

9. Pâte à tarte crue façonnée sous forme de moule en pâte obtenue par le procédé selon l'une quelconque des revendications précédentes, dont la surface a été traitée à la vapeur sur une épaisseur comprise entre 200 et 500 µm.

10. Pâte façonnée selon la revendication 9, **caractérisée en ce que** le traitement à la vapeur est effectué par un apport en eau sous forme de vapeur à une température comprise entre 100°C et 250°C et à un débit compris entre 300 et 700 kg/h pendant une durée comprise entre 5 et 90 secondes, suivi d'une étape de refroidissement d'au moins 60 secondes.

11. Pâte façonnée selon les revendications 9 à 10, **caractérisée en ce qu'**elle comprend une ou plusieurs farine(s) dont la teneur en protéines est inférieure ou égale à 15% en poids total de farines.

12. Pâte façonnée selon les revendications 9 à 11, **caractérisée en ce que** sa teneur totale en farine est comprise entre 40 et 65 % en pourcentage du poids total de pâte.

13. Pâte façonnée selon les revendications 9 à 12, **caractérisée en ce qu'**elle comprend une ou plusieurs matière(s) grasse(s) dont la teneur totale est comprise entre 0 et 30 % en poids total du pâton.

14. Pâte façonnée selon les revendications 9 à 13, **caractérisée en ce qu'**elle comprend une teneur en eau comprise entre 15 et 35 %.

15. Pâte façonnée selon les revendications 9 à 14, **caractérisée en ce qu'**elle est remplie d'une garniture.

## Patentansprüche

1. Verfahren zum Herstellen eines rohen, vorgeformten und stabilisierten Kuchenteiges, **dadurch gekennzeichnet, dass** es wenigstens umfasst
a) Bilden einer Teigmasse,
b) Bearbeiten der Masse, wobei das Bearbeiten Vorgänge zum Formen des Teiges durch Ausbilden einer Absenkung und Vortrieb umfasst, um einen bearbeiteten Teig zu erhalten,
c) Behandeln der Oberfläche des bearbeiteten Teiges mit Dampf für eine Dauer von 5 bis 90 Sekunden,
d) Abkühlen für mindestens 60 Sekunden.

2. Verfahren nach Anspruch 1, **dadurch gekennzeichnet, dass** das Behandeln mit Dampf mittels Zufuhr von Wasser in Form von Dampf bei einer Temperatur zwischen 100 und 250 °C und einer Rate von 300 bis 700 kg/h erfolgt.

3. Verfahren nach Anspruch 2, **dadurch gekennzeichnet, dass** die Expositionsdauer der Behandlung mit Dampf weniger als 30 Sekunden beträgt.

4. Verfahren nach einem der vorangehenden Ansprüche, **dadurch gekennzeichnet, dass** die Masse ein oder mehrere Mehle umfasst, deren Proteingehalt 15 % oder weniger bezogen auf das Gesamtgewicht der Mehle beträgt.

5. Verfahren nach einem der vorangehenden Ansprüche, **dadurch gekennzeichnet, dass** der Träger während der Dampfbehandlung weniger als 30 % der Oberfläche des geformten Teiges abdeckt.

6. Verfahren nach Anspruch 5, **dadurch gekennzeichnet, dass** der Träger ein Absenkring ist.

7. Verfahren nach Anspruch 5, **dadurch gekennzeichnet, dass** der Träger eine gelochte Form ist.

8. Verfahren nach einem der vorangehenden Ansprüche, **dadurch gekennzeichnet, dass** die Masse geformt wird durch Ausschneiden einer Form aus einer Teig bahn.

9. Roher Kuchenteig in der Form einer Kuchenform, der erhalten ist nach einem Verfahren nach einem der vorangehenden Ansprüche, dessen Oberfläche mit Dampf über eine Dicke zwischen 200 und 500 µm behandelt worden ist.

10. Geformter Teig nach Anspruch 9, **dadurch gekennzeichnet, dass** die Behandlung mit Dampf durch Zufuhr von Wasser in Form von Dampf bei einer Temperatur zwischen 100 °C und 250 °C und einer Rate von 300 bis 700 kg/h für eine Dauer von 5 bis 90 Sekunden erfolgt, gefolgt von Abkühlen für mindestens 60 Sekunden.

11. Geformter Teig nach einem der Ansprüche 9 bis 10, **dadurch gekennzeichnet, dass** er ein oder mehrere Mehle umfasst, deren Proteingehalt 15 % oder weniger bezogen auf das Gesamtgewicht an Mehl beträgt.

12. Geformter Teig nach einem der Ansprüche 9 bis 11, **dadurch gekennzeichnet, dass** der Gesamtgehalt an Mehl zwischen 40 und 65 % bezogen auf das Gesamtgewicht des Teiges beträgt.

13. Geformter Teig nach einem der Ansprüche 9 bis 12, **dadurch gekennzeichnet, dass** er ein oder mehrere Fettstoffe umfasst, deren Gesamtgehalt zwischen 0 und 30 % bezogen auf das Gesamtgewicht des Teiges beträgt.

14. Geformter Teig nach einem der Ansprüche 9 bis 13, **dadurch gekennzeichnet, dass** er einen Wassergehalt von 15 bis 35 % aufweist.

15. Geformter Teig nach einem der Ansprüche 9 bis 14, **dadurch gekennzeichnet, dass** er mit einer Füllung versehen ist.

## Claims

1. A method for producing a pre-shaped and stabilized raw pastry dough,
**characterized in that** it comprises at least:
a) a step of forming a piece of dough consisting of dough,
b) a step of shaping the piece of dough, comprising the operations of shaping the dough by forming a sheet and performing fonçage to obtain a shaped dough,
c) a step of treating the surface of the shaped dough with steam for a period of between 5 and 90 seconds, and
d) a cooling step of at least 60 seconds.

2. The method as set forth in claim 1, **characterized in that** the steam treatment stage is carried out by supplying water in the form of steam at a temperature of between 100 and 250 °C and at a rate of between 300 and 700 kg/h.

3. The method as set forth in claim 2, **characterized in that** the duration of exposure to the steam treatment is less than 30 seconds.

4. The method as set forth in any one of the preceding claims, **characterized in that** the piece of dough comprises one or more flours whose protein content is less than or equal to 15% by total weight of the flour(s).

5. The method as set forth in any one of the preceding claims, **characterized in that** the support during the steaming step masks less than 30% of the surface of the shaped dough.

6. The method as set forth in claim 5, **characterized in that** the support is a tart ring.

7. The method as set forth in claim 5, **characterized in that** the support is a perforated mold.

8. The method as set forth in any one of the preceding claims, **characterized in that** the piece of dough is formed by cutting out a shape from a strip of dough.

9. A raw pastry dough shaped into the form of a dough mold obtained using the method as set forth in any one of the preceding claims, the surface of which has been steam-treated to a thickness of between 200 and 500 µm.

10. The shaped dough as set forth in claim 9, **characterized in that** the steam treatment is carried out by supplying water in the form of steam at a temperature of between 100 °C and 250 °C and at a rate of between 300 and 700 kg/ h for a period of between 5 and 90 seconds, followed by a cooling step of at least 60 seconds.

11. The shaped dough as set forth in claims 9 to 10, **characterized in that** it comprises one or more flours whose protein content is less than or equal to 15% by total weight of the flour(s).

12. The shaped dough as set forth in claims 9 to 11, **characterized in that** the total flour content thereof is between 40 and 65% as a percentage of the total weight of the dough.

13. The shaped dough as set forth in claims 9 to 12, **characterized in that** it comprises one or more fats, the total content of which is between 0 and 30% by total weight of the piece of dough.

14. The shaped dough as set forth in claims 9 to 13, **characterized in that** it comprises a water content of between 15 and 35%.

15. The shaped dough as set forth in claims 9 to 14, **characterized in that** it is filled with a filling.
